# EUROPÄISCHE PATENTSCHRIFT

(11) **EP 1 006 670 B1**
(45) Veröffentlichungstag und Bekanntmachung des Hinweises auf die Patenterteilung: **07.01.2009**
(21) Anmeldenummer: 99203945.3
(22) Anmeldetag: 22.11.1999
(51) Int. Cl.: H04B 1/707, H04B 7/005

(54) **Drahtloses Netzwerk**
Wireless Network
Réseau sans fil

(30) Priorität: 30.11.1998 DE 19855242
(43) Veröffentlichungstag der Anmeldung: 07.06.2000
(73) Patentinhaber: Philips Intellectual Property & Standards GmbH, 20099 Hamburg (DE); Koninklijke Philips Electronics N.V., 5621 BA Eindhoven (NL)
(72) Erfinder: Du, Yonggang, Philips Intellectual Pty. GmbH, 52064 Aachen (DE); Herrmann, Christoph, Philips Intelectual Pty. GmbH, 52064 Aachen (DE)
(74) Vertreter: Volmer, Georg

(56) Entgegenhaltungen:
- EP-A- 0 767 544
- EP-A1- 0 078 903
- WO-A-97/36395
- US-A- 5 712 866
- US-A- 6 141 373

## Beschreibung

Die Erfindung bezieht sich auf ein drahtloses Netzwerk mit mindestens einer Basisstation und mehreren zugeordneten Terminals zum Austausch von Nutz- und Steuerdaten.

In dem Dokument "ETSI SMG2, Meeting no 24, Cork Ireland, 1-5 December 1997, Tdoc SMG2 359/97, Concept Group Alpha - Wideband Direct-Sequence CDMA (WCDMA), EVALUATION DOCUMENT (3.0), Part 1: System Description, Performance Evaluation" wird ein nach dem CDMA-Verfahren (CDMA = Code Division Multiplex Access) arbeitendes Funknetzwerk vorgeschlagen. Das Funknetzwerk besteht aus mehreren Funkzellen mit jeweils einer Basisstation und darin befindlichen Terminals oder Mobilstationen. Nach der Registrierung und Synchronisierung eines Terminals, sendet ein Terminal beispielsweise bei Anforderung eines Nutzkanals ein Meldungspaket (Random-Access burst) über einen Zufallskanal (RACH = Random Access Channel). Das Meldungspaket besteht aus einem Präambelteil (Preamble part) und einem Datenteil (Data part). Der Präambelteil besteht aus 16 orthogonalen Symbolen (Präambelsequenz/ Preamble sequence), die durch einen Gold-Code (Präambel-Code/ Preamble code) gespreizt ist. Der Gold-Code enthält 256 Chipintervalle. Der Datenteil enthält ein Feld mit einer Identifizierung für das Terminal, ein Feld zur Kennzeichnung des angeforderten Dienstes (Übertragung kurzer Pakete/short packet transmission, Verbindungswunsch für einen dedizierten Nutzkanal/dedicated-channel set-up usw.), ein optionales Feld für Datenpakete (Optional user packet) und ein CRC-Feld zur Fehlerdetektierung. Ein von einer Basisstation empfangenes Meldungspaket wird über ein Matched-Filter, einen Präambel-Korrelator (Preamble correlator), einen Impulsdetektor (Peak detector) zu einem den Zeitverlauf des Datenteils abschätzenden Schaltungsteil geliefert, welches eine RAKE-Schaltung zur Auswertung des Datenteils steuert. Es wird hier also eine aufeiner Korrelation basierende Impulsdetektion mit anschließender Nachrichtendeeodierung angewendet.

Für die einer Basisstation zugeordneten Terminals stehen 80 Zufallskanäle zur Verfügung. Diese Kanäle werden durch 16 unterschiedliche Präambel-Codes und 5 unterschiedliche Sendezeitpunkte bestimmt. Senden zwei oder mehrere Terminals über denselben Zufallskanal, d.h. es wird derselbe Präambel-Code und Sendezeitpunkt gewählt, entsteht eine Kollision und die von den Terminals ausgesendeten Informationen können von der Basisstation nicht korrekt ausgewertet werden. Solche Kollisionen sind insbesondere bei hohen Verkehrsbelastungen wahrscheinlich.

Der Erfindung liegt die Aufgabe zugrunde, ein drahtloses Netzwerk zu schaffen, bei dem ein Terminal auf eine andere Art Signalisierungsinformationen mit der zugeordneten Basisstation austauscht.

Die Aufgabe wird durch ein drahtloses Netzwerk der eingangs genannten Art dadurch gelöst, daß die Basisstation zur Sendung des Startzeitpunktes wenigstens einer Signalisierungssequenz wenigstens eines Terminals vorgesehen ist, daß die Basisstation eine Vorrichtung zur Korrelation einer empfangenen Signalisierungssequenz und zur Detektion des aus einer empfangenen und korrelierten Signalisierungssequenz entstandenen Impulses enthält und daß ein Terminal zur Erzeugung einer Signalisierungssequenz durch Faltung zweier Codesequenzen vorgesehen ist.

Unter dem erfindungsgemäßen drahtlosen Netzwerk ist ein Netzwerk mit mehreren Funkzelten zu verstehen, in denen jeweils eine Basisstation und mehrere Terminals Steuer- und Nutzdaten drahtlos übertragen. Eine drahtlose Übertragung dient zur Übertragung von Informationen z.B. über Funk-, Ultraschall- oder Infrarotwege.

Nach der Registrierung und Synchronisierung muß ein Terminal zur Übertragung von Nutzdaten einen bestimmten Nutzkanal bei der zugeordneten Basisstation anfordern. Ein solcher Nutzkanal kann beispielsweise ein dedizierter Nutzkanal (z.B. zur Sprachübertragung) entweder zwischen Basisstation und Terminal oder zwischen zwei Terminals sein. Die Zuweisung der Kanäle nimmt die Basisstation vor. Erfindungsgemäß wird von einem Terminal über einen von der Basisstation vorgegebenen Signalisierungskanal eine Anforderung z.B. nach einem dedizierten Nutzkanal übertragen. Von der Basisstation muß wenigstens der Startzeitpunkt einer ggf. vorher bekannten Signalisierungssequenz den Terminals mitgeteilt werden. Es ist auch möglich, daß außer dem Startzeitpunkt den Terminals auch eine von mehreren Signalisierungssequenzen zugewiesen wird. Eine solche Signalisierungssequenz ist eine Gold- oder Kasami-Sequenz mit guten Auto- und Kreuzkorrelationseigenschaften. In der Basisstation ist eine Vorrichtung (z.B. ein Matched-Filter) enthalten, in der eine Korrelation der empfangenen Signalisierungssequenzen durchgeführt wird. Der aus der Korrelation entstandene Impuls wird detektiert und einem Terminal zugeordnet. Da bei dem erfindungsgemäßen Netzwerk durch unterschiedliche Startzeitpunkte der Signalisierungssequenzen eine Kollision vermieden wird und keine Nachrichtendecodierung nach einer auf einer Korrelationbasierenden Impulsdetektion durchgeführt wird, sondern das Auftreten des aus der Signalisierungssequenz entstandenen Impulses als Signalisierungswunsch angesehen wird, kann eine Signalisierungsdetektion insbesondere bei hohen Verkehrsbelastungen robuster und schneller als beim Stand der Technik durchgeführt werden.

Zur Detektion einer Signalisierungssequenz wird in Abhängigkeit von dem Startzeitpunkt der Signalisierungssequenz und von den Kanaleigenschatten ein bestimmter Zeitbereich zur Impulsdetektion gewählt. Ein solcher Zeitbereich wird als Detektionafenster bezeichnet. Die Länge oder Dauer und der Startzeitpunkt des Detektionsfensters muß so gewählt werden, daß eine Impulsdetektion möglich ist. Die Detektionsfenster sind kleiner als die Zeitdauer der aus dem Stand der Technik bekannten Meldungspakete. Mit der erfindungsgemäßen Signalisierung können also viele Terminals innerhalb eines kurzen Zeitbereiches einen Signalisierungswunsch absetzen.

Ein Terminal in einer Funkzelle hat nach der Registrierung und Synchronisierung für das Aussenden einer Signalisierungssequenz immer den gleichen Startzeitpunkt bezogen aufeinen Referenzrahmen, solange die Basisstation diesen Startzeitpunkt nicht explizit ändert. Somit ist zunächst permanent für ein Terminal ein Signalisierungskanal belegt. Da in dem Referenzrahmen, der von kurzer Dauer (z.B. 10 ms) ist, viele solcher Startzeitpunkte enthalten sein können und da alle Terminals einer Funkzelle dieselbe Signalisierungssequenz verwenden, werden bei der permanenten Zuordnung eines Startzeitpunktes und einer Signalisierungssequenz zu einem Terminal, nur wenig Netzwerkresourcen verbraucht.

Die Signalisierungssequenzen aller Terminals in einer Funkzelle weisen unterschiedliche Startzeitpunkte auf. Es werden von jedem Terminal im einfachsten Fall die selben Signalisierungssequenzen verwendet. Die Signalisierungssequenzen können sich daher teilweise überlagern, da die Länge einer Sequenz in der Regel länger als der Abstand von zwei aufeinanderfolgenden Startzeitpunkten ist.

Ein Vorteil des erfindungsgemäßen Netzwerkes besteht auch in der Sicherheit des Erkennens eines Signalisierungswunsches. Es wird praktisch immernach Sendung einer Signalisierungssequenz ein detektierbarer Impuls erzeugt. Das kommt daher, weil Störsignale und Kanalrauschen zu "künstlichen" Impulsen am Ausgang des Matched-Filters führen können. Es ist sehr unwahrscheinlich, daß diese die Amplitude der Impulse am Ausgang des Matched-Filters bei Empfang einer tatsächlich gesendeten Signalisierungssequenz verkleinern. Im schlechtesten Fall (z.B. bei Störungen) wird also ein Fehlalarm ausgelöst, wenn die Amplitude des Rausch- oder Störsignals die Detektioneschwelle überschreitet, ohne daß eine Signalisierungssequenz gesendet worden ist.

Bei einer Verlängerung der Länge und bei gleichbleibender Amplitude einer Signalisierungssequenz kann sich die Fehler-Alarm-Rate (False-Alarm = Rate FAR) der Signalisierungssequenz reduzieren. Eine längere Signalisierungssequenz bedeutet jedoch einen größeren Schaltungsaufwand. Um den Schaltungsaufwand bei einer verlängerten Signalisierungssequenz so gering wie möglich zu halten, ist es vorteilhaft, die Signalisierungssequenz in zwei Schritten zu erzeugen. Hierbei wird eine erste Codesequenz mit einer zweiten Codesequenz verkettet oder gefaltet. Es kann als erste Codesequenz eine Barker-Sequenz mit 13 Zeitintervallen und als zweite Codesequenz eine Gold-Sequenz mit 256 Zeitintervallen verwendet werden. Durch die Verkettung dieser beiden Codesequenzen mit jeweils guter Autokorrelationsfunktion ergibt sich eine gute Aurtokorrelationseigenschaft der sich aus der Verkettung ergebenden Signalisierungssequenz.

Für die beiden Codesequenzen können auch andere als die Gold-Sequenz mit 256 Zeitintervallen und die Barker-Sequenz mit 13 Zeitintervallen gewählt werden. Für die Wahl dieser beiden Codesequenzen ist die Autokorrelationseigenschaft der sich ergebenden Signalisierungssequenz nach der Faltung dieser beiden Codesequenzen entscheidend.

Um eine solche aus zwei Codesequenzen bestehende Signalisierungssequenz zu detektieren enthält eine Basisstation zwei in Reihe geschaltete Matched-Filter oder ein Matched-Filter und ein nachgeschaltetes Mis-Matched-Filter zur Erzeugung wenigstens eines Impulses nach Empfang einer Signalisierungssequenz aus zwei gefalteten Codesequenzen und einen Impulsdetektor. Der Impulsdetektor ist während eines bestimmten Detektionsfensters, dessen Startzeitpunkt und Dauer durch die Kanaleigenschaften und den Startzeitpunkt einer Signalisierungssequenz bestimmt ist, zur Detektion wenigstens, eines einem Terminal zugeordneten Impulses vorgesehen ist.

Ausführungsbeispiele der Erfindung werden nachstehend anhand der Fig. näher erläutert. Es zeigen:
- Fig. 1: ein drahtloses Netzwerk mit mehreren Basisstationen und Terminals,
- Fig. 2 und 3: Folgen von Detektionsfenstern für ein in einer Basisstation verwendetes Matched-Filter in Bezug auf einen Referenzrahmen,
- Fig. 4: zwei beispielhafte von zwei Terminals ausgesendete Signalisierungssequenzen und die entsprechenden Detektionsfenster,
- Fig. 5: die Position der aus der Detektierung von Signalisierungssequenzen gebildeten Impulse zur Übertragung von n-Bit-Signalisierungsinformationen,
- Fig. 6: einen Empfänger einer Basisstation,
- Fig. 7: einen Sender einer Basisstation,
- Fig. 8: einen Empfänger eines Terminals und
- Fig. 9: einen Sender eines Terminals.

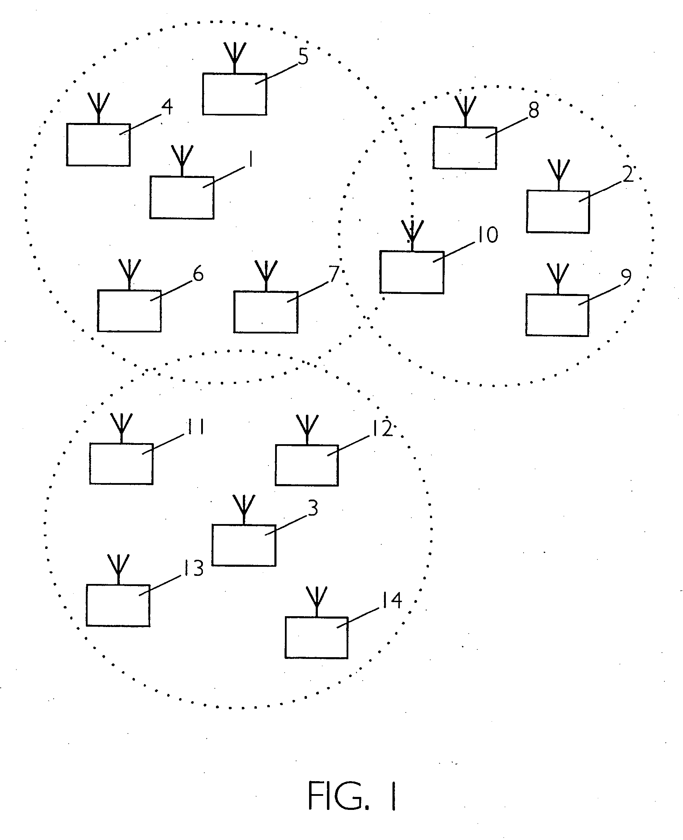

In Fig. 1 ist ein drahtloses Netzwerk, z.B. Funknetzwerk, mit mehreren Basisstationen 1 bis 3 und mehreren Terminals 4 bis 14 dargestellt. Einer Basisstation 1 bis 3 sind bestimmte Terminals 4 bis 14 zugeordnet. In dem in Fig. 1 dargestellten Beispiel sind der Basisstation 1 die Terminals 4 bis 7, der Basisstation 2 die Terminals 8 bis 10 und der Basisstation 3 die Terminals 11 bis 14 zugewiesen. Ein Steuerdatenaustausch findet zumindest zwischen der Basisstation und den Terminals statt. Ein Nutzdatenaustausch kann sowohl zwischen der Basisstation und den Terminals als auch direkt zwischen den Terminals durchgeführt werden. In beiden Fällen wird von der Basisstation die Verbindung zur Übertragung von Nutzdaten aufgebaut. Die Terminals 4 bis 14 sind in der Regel Mobilstationen, die von einer fest installierten Basisstation 1 bis 3 gesteuert werden. Eine Basisstation 1 bis 3 kann gegebenenfalls aber auch beweglich bzw. mobil sein.

In dem drahtlosen Netzwerk werden beispielsweise Funksignale nach dem FDMA-, TDMA- oder CDMA-Verfahren (FDMA = frequency division multiplex access, TDMA = time division multiplex access, CDMA = code division multiplex access) oder nach einer Kombination der Verfahren übertragen.

Beim CDMA-Verfahren, das ein spezielles Code-Spreiz-Verfahren (code spreading) ist, wird eine von einem Anwender stammende Binärinformation (Datensignal) mit jeweils einer unterschiedlichen Codesequenz moduliert. Eine solche Codesequenz besteht aus einem pseudo-zufälligen Rechtecksignal (pseudo noise code), dessen Rate, auch Chiprate genannt, in der Regel wesentlich höher als die der Binärinformation ist. Die Dauer eines Rechteckimpulses des pseudo-zufälligen Rechtecksignals wird als Chipintervall T_{C} bezeichnet. 1/T_{C} ist die Chiprate. Die Multiplikation bzw. Modulation des Datensignals mit dem pseudo-zufälligen Rechtecksignal hat eine Spreizung des Spektrums um den Spreizungsfaktor N_{c} = T/T_{c}zur Folge, wobei T die Dauer eines Rechteckimpulses des Datensignals ist.

Den Basisstationen sind bestimmte Funkzellen zugeordnet, in denen der Datenverkehr mit den jeweils in der Funkzellle befindlichen Terminals abgewickelt wird. Bewegt sich ein Terminal aus einer Funkzelle in eine andere Funkzelle, so wird nach bestimmten Vorgaben die Zuordnung des Terminals von einer zur anderen Basisstation abgewickelt. Dabei kann dieses Terminal gleichzeitig beim Übergang von einer zu einer anderen Funkzelle mit den Basisstationen der beiden Funkzellen Daten austauschen. Dies wird als Soft-Handover bezeichnet. Eine Funkzelle ist in Fig. 1 durch einen gestrichelt gezeichneten Kreis angedeutet.

Nutzdaten und Steuerdaten zwischen wenigstens einem Terminal und einer Basisstation werden über von der Basisstation vorgegebene Kanäle übertragen. Die Funkverbindung von der Basisstation zu den Terminals wird als Downlink und von den Terminals zur Basisstation als Uplink bezeichnet. Somit werden über Downlink-Kanäle Daten von der Basisstation zu den Terminals und über Uplink-Kanäle von Terminals zur Basisstation gesendet. Beispielsweise kann ein Downlink-Steuerkanal vorgesehen sein, der benutzt wird, um von der Basisstation Steuerdaten vor einem Verbindungsaufbau an alle Terminals zu verteilen. Ein solcher Kanal wird als Downlink-Verteil-Steuerkanal (broadcast control channel) bezeichnet. Zur Übertragung von Steuerdaten vor einem Verbindungsaufbau von einem Terminal zur Basisstation kannbeispielsweise ein von der Basisstation zugewiesener Uplink-Steuerkanal verwendet werden, auf den aber auch andere Terminals zugreifen können. Ein Uplink-Kanal, der von mehreren oder allen Terminals benutzt werden kann, wird als gemeinsamer Uplink-Kanal (common uplink channel) bezeichnet. Nach einem Verbindungsaufbau z.B. zwischen einem Terminal und der Basisstation werden Nutzdaten über einen Downlink- und ein Uplink-Nutzkanal übertragen. Zur direkten Übertragung von Nutzdaten zwischen zwei Terminals, werden Kanäle verwendet, die als Peer-to-Peer-Nutzkanäle bezeichnet werden. Kanäle, die nur zwischen einem Sender und einem Empfänger aufgebaut werden, werden als dedizierte Kanäle bezeichnet. In der Regel ist ein Nutzkanal ein dedizierter Kanal, der von einem dedizierten Steuerkanal zur Übertragung von verbindungsspezifischen Steuerdaten begleitet werden kann.

Ein Kanal ist durch einen Frequenzbereich, einen Zeitbereich und z.B. beim CDMA-Verfahren durch einen Spreizungscode bestimmt. Damit Nutzdaten zwischen Basisstation und einem Terminal ausgetauscht werden können, ist es erforderlich, daß das Terminal mit der Basisstation synchronisiert wird. Beispielsweise ist aus dem GSM-System (GSM = Global System for Mobile communication) bekannt, in welchem eine Kombination aus FDMA- und TDMA-Verfahren benutzt wird, daß nach der Bestimmung eines geeigneten Frequenzbereichs anhand vorgegebener Parameter die zeitliche Position eines Rahmens bestimmt wird (Rahmensynchronisation), mit dessen Hilfe die zeitliche Abfolge zur Übertragung von Daten erfolgt. Ein solcher Rahmen ist immer für die Datensynchronisation von Terminals und Basisstation bei TDMA-, FDMA- und CDMA-Verfahren notwendig. Ein solcher Rahmen kann verschiedene Unter- oder Subrahmen enthalten oder mit mehreren anderen aufeinanderfolgenden Rahmen einen Superrahmen bilden. Aus Vereinfachungsgründen wird im folgenden von einem Rahmen ausgegangen, der als Referenzrahmen bezeichnet wird.

Um eine Rahmensynchronisation durchführen zu können, müssen alle Terminals auf die Basisstation mit Hilfe von Impulsen, die von der Basisstation ausgesendet werden, synchronisiert werden. Falls kein Code-Spreiz-Verfahren (z.B. CDMA-Verfahren) angewendet wird (z.B. wird ein TDMA-Verfahren verwendet), entspricht die Impulsdauer genau dem für die Sendung eines Bits benötigten Zeitintervall. Bei Anwendung eines Code-Spreiz-Verfahrens entspricht die Impulsdauer einem Chipintervall. Ein Bitintervall entspricht dabei mehreren Chipintervallen. Zur Rahmensynchronisation ist die Sendung einer speziellen Impulssequenz durch die Basisstation erforderlich. Der Startzeitpunkt der Impulssequenz entspricht dem Startzeitpunkt eines Rahmens.

Im folgenden sei vorausgesetzt, daß die Terminals bereits mit der Basisstation synchronisiert und dort registriert sind. Bevor ein Terminal (z.B. eines der Terminals 4 bis 7 in Fig. 1) Nutzdaten senden und empfangen kann, muß diesem zur Übertragung ein Nutzkanal für eine Downlink- und eine Uplink-Verbindung oder ein Peer-to-Peer-Nutzkanal von der zugehörigen Basisstation (z.B. Basisstation 1 in Fig. 1) zur Verfügung gestellt werden. Hierzu sendet die Basisstation (z.B. die Basisstation 1 in Fig. 1) an die zugeordneten Terminals (z.B. die Terminals 4 bis 7) über einen Downlink-Verteil-Steuerkanal (downlink broadcast control channel) während eines frei wählbaren Rahmens Steuerdaten. Diese Steuerdaten unterrichten die Terminals darüber, zu welchem Zeitpunkt (Sequenz-Startzeitpunkt) bezogen auf den Rahmen diese jeweils eine spezielle Signalisierungssequenz senden können. Eine solche von einem Terminal gesendete Signalisierungssequenz ist ein pseudo-zufälliges Rechtecksignal und gibt an, daß dieses Terminal einen Nutzkanal anfordert. Jedem Terminal wird daher zur Aussendung einer Signalisierungssequenz von der Basisstation ein Uplink-Signalisierungskanal zugewiesen, über den Signalisierungssequenzen übertragen werden. Um die Anzahl der Sendung von Steuerdaten zu begrenzen, kann die Basisstation die Zuordnung der Signalisierungssequenz und des Sequenz-Startzeitpunkts für jedes Terminal nur einmal durchführen. Dies kann beispielsweise während der Registrierung eines Terminals bei der zugehörigen Basisstation passieren. Die Zuweisung der Sequenz-Startzeitpunkte kann aber auch - wie weiter unten erläutert wird - in Abhängigkeit von den unterschiedlichen Kanaleigenschaften der Verbindungen zwischen Basisstation und Terminals erfolgen. Ein Signalisierungskanal ist bei der Erfindung durch die bestimmte Signalisierungssequenz und deren Startzeitpunkt realisiert.

Alle einer Basisstation zugeordneten Terminals senden die gleiche Signalisierungssequenz aber zu unterschiedlichen Zeitpunkten (Sequenz-Startzeitpunkten) aus. Folglich weisen unterschiedliche Basisstation ihren zugeordneten oder registrierten Terminals unterschiedliche Signalisierungssequenzen zu. Hierbei ist es allerdings ausreichend, wenn nur die benachbarten Basisstationen jeweils unterschiedliche Signalisierungssequenzen haben. Wenn ein Terminal beispielsweise bei einem Übergang von einer in eine andere Funkzelle bei zwei Basisstationen registriert ist, sendet dieses die Signalisierungssequenz aus, welche die Basisstation vorgibt, von der ein Nutzkanal angefordert wird.

Eine Basisstation enthält ein einziges Matched-Filter und einen nachgeordneten Impulsdetektor zur Detektion der von den Terminals ausgesendeten Signalisierungssequenzen. Das Matched-Filter wird mit einer Taktrate getaktet, die wenigstens gleich der maximalen Chiprate ist, wenn eine Codespreizung verwendet wird, oder gleich der maximalen Bitrate, wenn keine Codespreizung verwendet wird. Von den Terminals werden solche Signalisierungssequenzen ausgesendet, die eine gute Autokorrelationseigenschaft aufweisen. Das bedeutet, daß die sich am Ausgang des Matched-Filters aus aufeinanderfolgenden Signalisierungssequenzen verschiedener Terminals ergebenen Impulse innerhalb eines Detektionsfensters von dem Inpulsdetektor eindeutig detektiert werden können. Die Wahl der Taktrate in Abhängigkeit von der maximalen Chiprate bzw. Bitrate und einer Signalisierungssequenz mit guten Autokorrelationseigenschaften ermöglicht, daß die aufeinanderfolgenden Signalisierungssequenzen einen minimalen zeitlichen Abstand zwischen Ihren Startzeitpunkten aufweisen. Weiterhin sollte die Signalisierungssequenz eine gute Kreuzkorrelationseigenschaft aufweisen, d.h. die Korrelation zu anderen im Netzwerk übertragenen Signalen sollte gering sein. Somit werden einerseits die anderen im Netzwerk übertragenen und vom Matched-Filter empfangenen Signale vom Impulsdetektor als ein vernachläßigbares Rauschsignal und andererseits werden die Signalisierungssequenzen von anderen Schaltungeselementen in der Basisstation, welche die anderen im Netzwerk übertragenen Signale verarbeiten, als vemachläßigbares Rausch- bzw- Störsignal interpretiert. Eine solche Signalisierungssequenz mit guten Auto- und Kreuzkorrelationseigenschaften ist beispielsweise die aus dem Buch "J.G. Proakis: Digital Communications von J.G. Proakis, Third Edition, McGraw-Hill International Editions, 1995, Seiten 724 bis 729" bekannte Sequenz von Gold und Kasami.

Die sich am Ausgang des Matched-Filters ergebenen Impulse sind ein Maß für die Energie der Signalisierungssequenzen. Die Länge und die im Gegensatz zu den anderen zu übertragenden Signale niedrige Amplitude der Signalisierungssequenz bestimmt demzufolge die Impulshöhe am Ausgang des Matched-Filters.

Der Sequenz-Startzeitpunkt einer Signalisierungssequenz sollte von der Basisstation so festgelegt werden, daß das Matched-Filter in der Basisstation einen Impuls nach der Detektion einer Signalisierungssequenz eines ihr zugeordneten Terminals in einem vorgegebenen Detektionsfenster erzeugt. Dieses Detektionsfenster weist die Dauer oder Länge * auf.

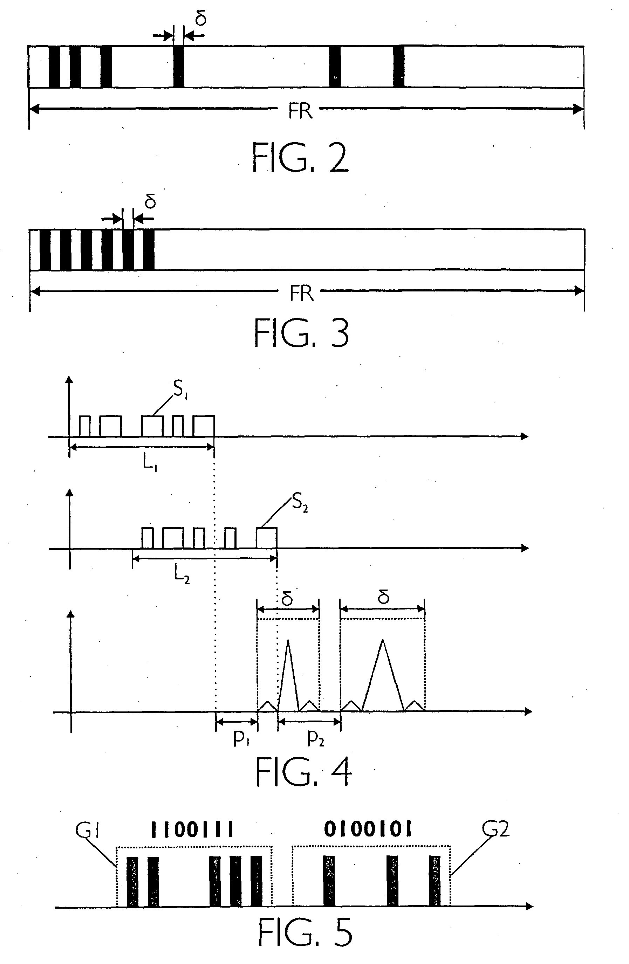

Prinzipiell lassen sich die Signalisierungssequenzen zu beliebigen Sequenz-Startzeitpunkten aussenden. Ein Sequenz-Startzeitpunkt ist mit dem Auftreten eines Impulses am Ausgang des Matched-Filters verbunden. Die Detektion beginnt nach Aussendung einer Signalisierungssequenz und einer durch die Kanaleigenschaft einer Verbindung zwischenwenigstens einem Terminal und einer Basisstation bedingten Verzögerung. Als Kanaleigenschaft werden die physikalischen Kenngrößen eines Kanals bezeichnet. Eine Kanaleigenschaft ergibt sich beispielsweise aus der Entfernung zwischen Terminal und Basisstation. Folglich ist es möglich, daß der Impulsdetektor unterschiedlich breite Detektionsfenster für die verschiedenen Terminals benutzt. Der Einfachheit halber wird hier eine einheitliche Breite des Detektionsfensters gewählt. Die Folge beliebig auftretender Detektionsfenster der Dauer * ist in Bezug auf den Referenzrahmen der Länge FR in Fig. 2 gezeigt. Das Matched-Filter erzeugt aus einer empfangenen Signalisierungssequenz in der Regel eine Impulsfolge mit einem Hauptimpuls und mehreren häufig symmetrisch um den Hauptimpuls verteilten Nebenimpulsen. Die Amplitude der Nebenimpulse ist regelmäßig kleiner als die Amplitude des Hauptimpulses.

Die verschiedenen vom Matched-Filter erzeugten Hauptimpulse müssen einen ausreichenden Abstand (guard time) aufweisen, damit sich die am Ausgang des Matched-Filters erscheinenden, durch den Kanal verzerrte Impulsfolge der unterschiedlichen Terminals nicht so überlappen, daß keine eindeutige Detektion möglich wird. Bei einer bestimmten Überlappung kann die Basisstation die Impulse nicht eindeutig einem Terminal zuordnen. Die Breite oder Dauer * des Detektionsfensters muß also mindestens gleich der Hauptimpulsbreite sein, die sich ohne Kanaleinfluß ergibt, und einem zusätzlichen kanalabhängigen Sicherheitsintervall sein. Daraus ergibt sich auch der Abstand von aufeinanderfolgenden, gleichen Signalisierungssequenzen. Es muß jedoch keine Rücksicht auf die zeitlichen Abstände von zwei unterschiedlichen Signalisierungssequenzen genommen werden, die von unterschiedlichen Basisstationen stammen, weil aufgrund geringer Korrelation ein dem Matched-Filter nachgeschalteter Impulsdetektor eine Signalisierungssequenz einer anderen Basisstation bzw. Funkzone als nicht störendes Rauschen detektiert.

Um möglichst viele Signalisierungssequenzen innerhalb eines vorgegebenen Zeitraumes auszusenden, kann erfindungsgemäß ein optimierter Abstand der Sequenz-Startzeitpunkte vorgesehen sein. Das bedeutet, daß jeweils die Breite des Detektionsfensters in Abhängigkeit von den Kanaleigenschatten zwischen einem Terminal und der Basisstation ermittelt wird. Eine andere erfindungsgemäße, einfacher zu realisierende Möglichkeit besteht darin, daß die Signalisierungssequenzen aufeinanderfolgend mit einem konstanten Abstand gesendet werden. Bei der Bestimmung des konstanten Abstandes sind die schlechtesten Kanaleigenschaften zu berücksichtigen. Fig. 3 zeigt die kontinuierlich aufeinanderfolgenden Detektionsfenster in Bezug auf den Referenzrahmen der Länge FR, die sich als Folge dermit einem vorgegebenen konstanten Abstand ausgesendeten Signalisierungssequenzen ergeben.

In Fig. 4 sind zwei beispielhafte Signalisierungssequenzen S₁ und S₂ gezeigt, welche die Sequenzdauer oder Sequenzlänge L₁ und L₂ aufweisen. Nach einer durch die Kanaleigenschaften bedingten Verzögerungszeit p₁ und p₂ startet jeweils der Detektionsvorgang bzw. das Detektionsfenster der Länge *. In einem solchen Detektionsfenster erscheint ein einer Signalisierungssequenz zugeordneter Hauptimpuls und Nebenimpulse.

Die Länge * des Detektionsfensters wird insbesondere durch drei Faktoren (Kanaleigenschalten) bestimmt. Erstens muß die Genauigkeit der Abschätzung der Ausbreitungsverzögerung (propagation delay) der zu übertragenden Daten von den Terminals zu der Basisstation, zweitens die Impulsverbreiterung (delay spread characteristic) aufgrund von Mehrfachausbreitung (multi-path) und drittens die Autokorrelationseigenschaften der Signalisierungssequenzen der Terminals in Betracht gezogen werden.

In einer Funkzelle sind die Terminals in der Regel unterschiedlich weit entfernt von der Basisstation. Dies führt zu unterschiedlichen Ausbreitungsverzögerungen der von den Terminals ausgesendeten Signalisierungssequenzen. Es soll die Ausbreitungsverzögerung zwischen dem Terminal MTᵢ und der Basisstation B gleich pᵢ und die Länge der Signalisierungssequenz gleich L sein. Wenn die Basisstation einen Impuls für das Terminal MT₁ am Ausgang des Matched-Filters zum Zeitpunkt tᵢ erwartet, weist es das Terminal MT₁ an, mit der Übertragung der Signalisierungssequenz zum Zeitpunkt T₁ - P₁- L zu beginnen. Jedoch wegen der begrenzten Genauigkeit der Abschätzung der Ausbreitungsverzögerung pᵢ ist der Impuls am Ausgang des Matched-Filters mit einer Ungenauigkeit behaftet. Diese Ungenauigkeit in der Abschätzung der Ausbreitungsverzögerung pᵢ muß durch ein genügend langes Detektionsfenster * kompensiert werden. Beträgt die maximale Ungenauigkeit in der Abschätzung für alle Terminals j, muß das Detektionsfenster größer als j sein.

Die Daten zwischen einem Terminal und einer Basisstation werden in der Regel nicht nur über einen Funkweg sondern über mehrere übertragen (Mehrfachausbreitung). Aufgrund von Reflexions- und Beugungseffekten läuft das von einem Terminal zur Basisstation übertragene Signal über verschiedene Wege und die sich daraus ergebenden, über verschiedene Wege laufende Signale werden von der Basisstation zu unterschiedlichen Zeitpunkten empfangen. Dadurch ergibt sich am Ausgang des Matched-Filters für eine Signalisierungssequenz nicht nur ein einzelner Hauptimpuls, sondern es erscheinen am Ausgang des Matched-Filters weitere Hauptimpulse. Diese weiteren Hauptimpulse entstehen am Ausgang des Matched-Filters durch Signale, die durch die Mehrfachausbreitung entstanden sind und die um den eigentlichen Hauptimpuls gruppiert sind. Der eigentliche Hauptimpuls entsteht am Ausgang des Matched-Filters aus der empfangenen eigentlichen Signalisierungssequenz. Daher muß die Länge * des Detektionsfensters größer als ein Fenster der Länge w gewählt sein, welches den eigentlichen Hauptimpuls und die weiteren Hauptimpulse enthält. Es sei bemerkt, daß auch ohne Mehrfachausbreitung am Ausgang des Matched-Filters nicht nur ein eigentlicher Hauptimpuls, sondern auch Nebenimpulse erscheinen. Die Amplitude der Nebenimpulse ist jedoch viel kleiner als die Amplitude des Hauptimpulses aufgrund der oben geschilderten guten Autokorrelationseigenschaften.

Die Autokorrelationseigenschaft der Signalisierungssequenz ist das Maß für die Breite des Hauptimpulses und der Minima und Maxima der Nebenimpulse am Ausgang des Matched-Filters (ohne Berücksichtigung der Kanaleigenschaften). Bei einer Gold- oder Kasami-Sequenz ist - wie oben erwähnt - der Hauptimpuls am Ausgang des Matched-Filters ungefähr gleich der Energie der Signalisierungssequenz. Die Amplitude des Hauptimpulses ist dabei sehr viel größer als die der Nebenimpulse. Die Energie der Signalisierungssequenz wird also bestimmt durch deren Amplitude und Dauer bzw. Länge. Um die Interferenz mit anderen Signalen zu reduzieren, sollte die Signalisierungssequenz (z.B. Gold- oder Kasami-Sequenz) eine gegenüber den anderen Signalen bedeutend geringere Amplitude aufweisen. Damit aber eine Detektion einer Signalisierungssequenz mit Hilfe des Matched-Filters möglich ist, muß die Signalisierungssequenz genügend lang sein. Hierdurch verlängert sich die Detektiondauer einer Signalisierungssequenz und damit die Zuweisung von Nutzkanälen der Basisstation zu dem Terminal (Verlängerung der Signalisierungszeit), welches eine Signalisierungssequenz gesendet hat. Also beeinflußt die Länge einer Signalisierungssequenz sowohl die Autokorrelationseigenschaft der Signalisierungssequenz als auch die Signalisierungszeit. Wenn für eine gegebene Signalisierungssequenz die Autokorrelationsfunktion innerhalb eines Zeitintervalls q hinreichend groß ist, muß * größer als q sein.

Es ist also festzuhalten, daß die Länge oder Dauer * des Detektionsfensters gleich der Summe der Werte von j, w und q gewählt werden muß:*=j+w+q

Bisher ist der Fall beschrieben worden, daß die Dauer * des Detektionsfenster so bemessen ist, daß nur eine einzige Signalisierungssequenz detektiert werden kann. Das bedeutet, das eine Basisstation eine binäre Information oder 1-Bit-Information erhält. Diese binäre Information gibt an, ob ein Terminal, welches die Signalisierungssequenz ausgesendet hat, einen neuen Nutzkanal (Impuls am Ausgang des Matched-Filters während der Dauer des Detektionsfensters vorhanden) oder keinen Nutzkanal anfordert (Impuls am Ausgang des Matched-Filters während der Dauer des Detektionsfensters nicht vorhanden). Im folgenden wird die Ausweitung der Übertragung von einer 1-Bit-zu einer n-Bit-Information (n>1, n ist ganze Zahl). Hierbei sendet ein Terminal die gleiche Signalisierungssequenz nicht einmal sondern mehrmals hintereinander pro Referenzrahmen aus, uni der Basisstation eine n-Bit-Information zur Verfügung zu stellen. Diese Erweiterung von einer 1-Bit- zu einer n-Bit-Information wird durch eine Verlängerung des Detektionsfensters erreicht, indem die Dauer oder Länge des Detektionsfensters für jedes betroffene Terminal um den Faktor n vergrößert wird. Damit können während des Auftretens des n-fach vergrößerten Detektionsfensters n Signalisierungssequenzen eines Terminals detektiert werden. Das Terminal, welches eine n-Bit-Infomation (Signalisierungsdaten) überträgt, verwendet gleiche Signalisierungssequenzen, deren Startzeitpunkte um den Wert * jeweils verschoben sind. Eine ausgesendete Signalisierungssequenz gibt dann beispielsweise eine "1" und eine nicht ausgesendete Signalisierungssequenz eine "0" an.

In Fig. 5 ist ein Beispiel für die Position von aus gleichen Signalisierungssequenzen detektierten Impulse dargestellt. Eine erste Gruppe G1 von Impulsen ist Signalisierungssequenzen eines ersten Terminals und eine zweite Gruppe G2 von Impulsen ist Signalisierungssequenzen eines zweiten Terminals zugeordnet. Aus der ersten Gruppe G1 ergibt sich die 7-Bit-Information "1100111" und aus der zweiten Gruppe G2 die Information "0100101".

Mit der Übertragung von n-Bit-Informationen eines Terminals sind verschiedene Signalisierungsanwendungen denkbar. Beispielsweise kann die Information "000", was einer Nichtaussendung von drei aufeinanderfolgenden Signalisierungssequenzen entspricht, bedeuten, daß das Terminal keinen Nutzkanal anfordert. Die Information "001" kann bedeuten, daß das Terminal einen 8-kBit/s-Nutzkanal anfordert. Durch zwei nicht ausgesendete und eine ausgesendete Signalisierungssequenz wird die Information "001" erzeugt. Der Wunsch nach einen 64-kBit/s-Nutzkanal eines Terminals kann durch die Information "010" und der Wunsch nach einem 144-kBit/s-Nutzkanal eines Terminals kann durch die Information "011" ausgedrückt werden.

Das Matched-Filter in der Basisstation ist hierbei für den Empfang sowohl von 1-Bit-als auch von n-Bit-Informationen vorgesehen, da in beiden Fällen die gleiche Signalisierungssequenz empfangen wird. Es unterscheidet sich in den beiden Fällen nur die Nachverarbeitung der vom Matched-Filter detektierten Impulse. Eine Informationsverarbeitung wird im ersten Fall nach der Dauer * für die Detektion einer Signalisierungssequenz und im zweiten Fall nach der Dauer * für die Detektion von n Signalisierungssequenzen durchgeführt.

Ein weiterer Punkt der Erfindung betrifft die Erhöhung der Signalisierungskanäle. Die Anzahl der Signalisierungskanäle einer Basisstation bei Verwendung einer einzigen Signalisierungssequenz ist auf den Wert FR/* begrenzt, wobei FR die Länge des Referenzrahmens und * die Länge eines Detektionsfensters ist. Hierbei ist angenommen, daß nur 1-Bit-Informationen übertragen werden, jedes Detektionsfenster gleich lang ist und die Länge * aufweist. Falls eine Basisstation mehr Signalisierungskanäle zuweisen möchte, als durch den Wert FR/* gegeben sind, kann diese den Terminals nicht nur eine einzige sondern unterschiedliche Signalisierungssequenzen zuweisen. Beispielsweise können während eines Referenzrahmens 100 gleiche Signalisierungssequenzen vom Matched-Filter detektiert werden. Sind aber z.B. 120 Terminals in der Funkzelle, die eine Signalisierungssequenz senden wollen, so ist es nicht möglich, daß alle diese 120 Terminals die gleiche Signalisierungssequenz verwenden. Daher können z.B. 60 Terminals eine erste und die anderen 60 Terminals eine zweite Signalisierungssequenz aussenden, die dann von zwei unterschiedlichen Matched-Filtern in der Basisstation detektiert werden können. Es sei noch erwähnt, daß die Sequenz-Startzeitpunkte der unterschiedlichen Signalisierungssequenzen unabhängig voneinander sind, also eine Koordinierung aufeinander nicht erforderlich ist. Nur die Startzeitpunkte der gleichen Signalisierungssequenzen müssen aufeinander abgestimmt werden.

Bei der Übertragung einer Signalisierungssequenz zu einer Basisstation muß noch darauf geachtet werden, daß die Amplitude der Signalisierungssequenz (vgl. Fig. 4) weder zu hoch noch zu niedrig ist, da bei bestimmten Verfahren (z.B. CDMA-Verfahren) die Amplitude der gesendeten Signalisierungssequenz an den Abstand zur zugeordneten Basisstation angepaßt werden sollten. Eine zu hohe Amplitude beispielsweise in einem CDMA-System bedeutet, daß eine Interferenz mit anderen Signalen entstehen kann. Hierdurch reduziert sich die Kapazität des gesamten Systems. Eine zu kleine Amplitude bedeutet, daß eine Signalisierungssequenz nicht korrekt empfangen werden kann, weil sie in der Basisstation durch die Interferenz durch andere Signale und/oder Rauschsignale nicht korrekt detektiert werden kann.

Um dieses Problem zu lösen, kann ein Terminal eine Signalisierungssequenz mit einer kleinen Amplitude aussenden, die unter normalen Umständen genügend gut von einer Basisstation zu empfangen ist. Wenn diese Signalisierungssequenz von der zugeordneten Basisstation detektiert worden ist, teilt die Basisstation dem Terminal einen angeforderten Kanal zu. Nach Empfang der Meldung, sendet das Terminal keine weitere Signalisierungssequenz mehr aus.

Wenn das Terminal nach Aussendung einer Signalisierungssequenz nach einer vorgegebenen Zeit keine Rückmeldung von der zugeordneten Basisstation erhält, sendet es eine neue Signalisierungssequenz mit einer höheren Amplitude aus. Wenn das Terminal nicht innerhalb der vorgegebenen Zeit eine Zuweisung von der Basisstation erhält, wird ein weitere Signalisierungssequenz mit einerwiederum erhöhten Amplitude ausgesendet. Dieser Prozeß wird solange wiederholt, bis ein vorgegebener, maximaler Wert für die Amplitude erreicht worden ist oder das Terminal zuvor eine Kanalzuweisung von der Basisstation erhalten hat.

In dem Fall, daß ein Terminal keine Rückmeldung für eine Signalisierungssequenz mit der maximal erlaubten Amplitude nach der vorgegebenen Zeit erhalten hat, wird dieser gesamte Prozeß nach einer bestimmten Zufallszeit wiederholt oder es wird auf eine Signalisierung verzichtet.

Wenn die Amplitude der Signalisierungssequenz so klein wie möglich ist, kann unter Umständen eine weiteres Problem auftauchen. Dieses Problem betrifft die Erhöhung der Fehler-Alarm-Rate (False Alarm Rate = FAR). Eine Fehler-Alarm-Rate ist gleich der Wahrscheinlichkeit, daß der dem Matched-Filter nachgeschaltete Impulsdetektor einen Impuls detektiert, obwohl keine Signalisierungssequenz gesendet worden ist.

Dieses Problem mit der Erhöhung der Fehler-Alarm-Rate kann dadurch gelöst werden, daß die Basisstation nach Detektion einer Signalisierungssequenz einem Terminal nicht sofort einen Kanal zuweist, sondern, daß die Basisstation mit der Zuweisung wartet, bis mehrere Signalisierungssequenzen (h signalisierungssequenzen mit h > 1) in g (g > 1) aufeinanderfolgenden Rahmen in dem vorgesehenen Detektionsfenster detektiert worden sind. Wenn die Fehler-Alarm-Rate für einen detektierten Impuls in der Basisstation gleich p ist, dann ist die Fehler-Alarm-Rate für h aufeinanderfolgende detektierte Impulse auf p^{h} reduziert.

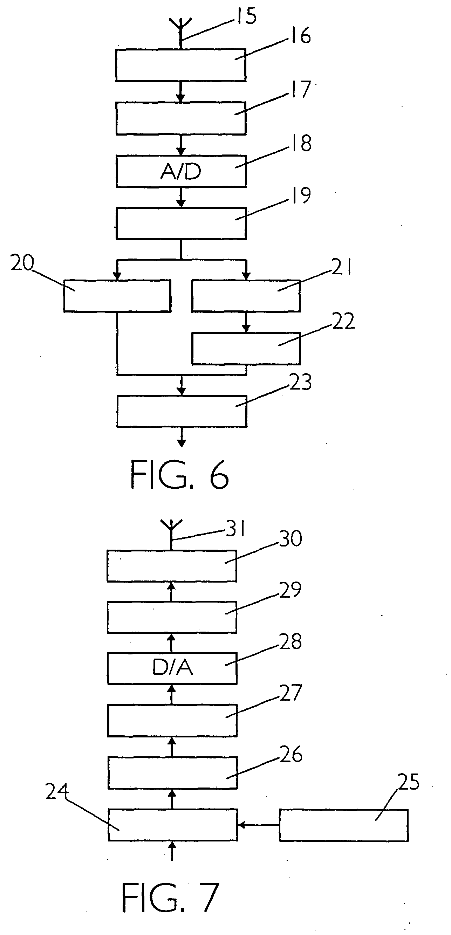

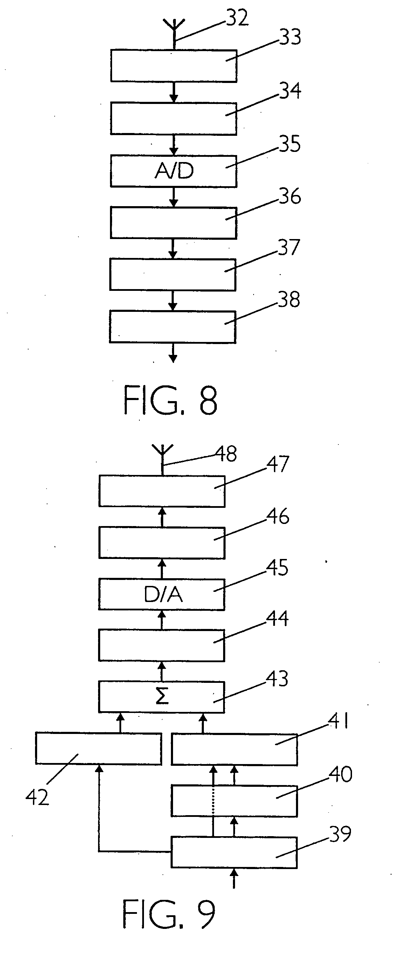

Die Erfindung kann in jedem existierenden oder noch einzuführenden Mobilfunksystem, wie z.B. GSM- oder auf WB-CDMA bzw. CD/TDMA basierenden UMTS- Mobilfunksystem (UMTS = Universal Mobile Telecommunication System) als zusätzliche Schaltungsteile eingefügt werden. In den Fig. 6 bis 9 ist ein Empfänger (Fig. 6) und ein Sender (Fig. 7) einer Basisstation und ein Empfänger (Fig. 8) und ein Sender (Fig. 9) eines Terminals dargestellt.

Das in Fig. 6 gezeigte Blockschaltbild eines Empfängers einer Basisstation enthält als bekannte Elemente (z.B. aus dem GSM-Mobilfunksystem oder einem CDMA-System) eine Antenne 15, einen Hochfrequenzblock 16, einen Zwischenfrequenzblock 17, einen Analog-Digital-Unisetzer 18 einen Demodulator 19 und einen Block 20, der z.B. die Schaltfunktionen Kanaldemultiplex, Deinterleaving, Kanaldecodierung und bei Verwendung eines CDMA-Systems auch eine Entepreizung (de-spreading) ausführt. Die im Basisband vorliegenden Steuer- und Nutzsignale werden einem Kanalzugriffssteuerblock 23 zugeführt, der die verschiedenen Signale an die entsprechenden Einheiten zur Weiterverarbeitung, wie z.B. einer Vermittlungsstelle weiterleitet. Erfindungsgemäß ist in den Empfänger der Basisstation ein Matched-Filter 21 eingefügt, welches die empfangenen Signale daraufhin überprüft, ob eine Signalisierungssequenz vorliegt. Ist eine Signalisierungssequenz während des erwarteten Zeitraumes (Detektionsfenster) detektiert worden, d.h. es wird wenigstens ein Impuls erzeugt, wird dies von einem nachfolgenden Impulsdetektor 22 festgestellt und dem Kanalzugriffssteuerblock 23 gemeldet, der z.B. ein Prozessor sein kann. Der Kanalzugriffssteuerblock 23 leitet diese Meldung an nachgeordnete hier nicht dargestellte weitere Steuerungselemente weiter, die dann z.B. mittels generierter Steuerdaten über den Sender der Basisstation dem Terminal einen Nutzkanal zuweisen.

Die Dauer oder Länge * des Detektionsfensters kann fest vorgegeben sein und beispielsweise durch Messungen vor dem normalen Betrieb des Netzwerks festgelegt worden sein. Es ist auch möglich die Dauer * des Detektionsfensters für jedes Terminal individuell während des Betriebs zu bestimmen. Die Dauer * des Detektionsfensters für eine bestimmte Signalisierungssequenz und eines Terminals wird in diesem Fall von einem hier nicht näher dargestellten Steuerungselement dem Impulsdetektor nach der Auswertung von Meßergebnissen zugeführt. Beim GSM-Mobilfunksystem wird beispielsweise die Entfernung zwischen einer Basisstation und einem Terminal anhand der vom Terminal empfangenen Signale in der Basisstation ausgewertet.

Die Informationsverarbeitung der vom Impulsdetektor 22 ermittelten vom Matched-Filter 21 erzeugten Impulse wird in dein Kanalzugriffssteuerblock 23 durchgeführt. Ein bestimmte Detektionsfenster ist einem Terminal zugeordnet. Wird in einem solchen Detektionsfenster wenigstens ein Hauptimpuls detektiert, stellt der Kanalzugriffssteuerblock 23 fest, daß eine Anfrage des Terminals nach einem Nutzkanal vorliegt. Aus dieser Anfrage und Anfragen weiterer Terminals und unter Betrachtung derbestehenden Verbindungen bzw. der vergebenden Nutzkanäle, entscheidet ein nicht näher dargestelltes Steuerelement nach Empfang der Anfrage vorn Kanalzugriffssteuerblock 23, ob dem anfragenden Terminal ein Nutzkanal zur Verfügung gestellt werden kann. Falls eine Zuweisung eines Nutzkanals möglich ist, wird dieser Nutzkanal bestimmt und nach Verarbeitung im Sender der Basisstation (Fig. 7) über einen Downlink-Verteil-Steuerkanal dem Terminal zugeführt.

Der in Fig. 7 dargestellte Sender der Basisstation enthält ebenfalls einen Kanalzugriffssteuerblock 24, der Daten von verschiedenen Quellen 25 erhält. Eine solche Quelle kann beispielsweise eine Vermittlungsstelle sein, die Nutzdaten liefert, oder ein Steuerungselement, welches Steuerdaten zuführt. Beispielsweise können diese Steuerdaten Informationen über einen zu verwendenden Nutzkanal für ein Terminal enthalten, welches mittels einer Signalisierungssequenz zuvor einen Nutzkanal angefordert hat. Der dem Steuerblock 24 nachfolgende Block 26 führt z.B. die Schaltfunktionen Kanalcodierung, Interleaving, Kanalmultiplex und bei Verwendung eines CDMA-Systems auch eine Spreizung (spreading) durch. Das Ausgangssignal des Blocks 26 wird über einen Modulator 27, einem Digital-Analog-Umsetzer 28, einem Zwischenfrequenzblock 29 und einem Hochfrequenzblock 30 zu einer Antenne 31 gegeben. Alle Elemente 25 bis 31 können aus existierenden Mobilfunksystemen bekannte Elemente sein.

Ein Blockschaltbild eines Empfängers eines Terminals zeigt Fig. 8. Dieser Empfänger enthält als beispielsweise aus dem GSM-Mobilfünksystem oder einem CDMA-System bekannte Elemente eine Antenne 32, einen Hochfrequenzblock 33, einen Zwischenfrequenzblock 34, einen Analog-Digital-Umsetzer 35, einen Demodulator 36, einen Block 37 mit verschiedenen Funktionen und einen Kanalzugriffssteuerblock 38, der Steuer- und Nutzdaten an verschiedene Senken (z.B. Niederfrequenzschaltung zur Umsetzung von Nutzdaten in Sprachdaten) liefert. Der Block 37 ist beispielsweise für die Schaltfunktionen Kanaldemultiplex, Deinterleaving, Kanaldecodierung und bei Verwendung eines CDMA-Systems für die Entspreizung zuständig. Der Kanalzugriffssteuerblock 38 wertet bestimmte für das Terminal relevante Kanäle, wie z.B. einen Nutzkanal oder einen Downlink-Verteil-Steuerkanal aus. Diese Informationen werden an bestimmte andere hier nicht dargestellte Schaltungselement im Terminal geleitet. Aus dem Downlink-Verteil-Steuerkanal entnimmt der Kanalzugriffsblock 38 beispielsweise die Information, zu welchem Startzeitpunkt, wenigstens eine Signalisierungssequenz ausgesendet werden kann. Diese Information wird an wenigstens ein hier nicht näher dargestelltes Schaltungselement geleitet.

Das Terminal enthält in seinem Sender, dessen zugehöriges Blockschaltbild in Fig. 9 dargestellt ist, ebenfalls ein Kanalzugriffssteuerblock 39, der einen Kanalzugriffsteuert. Der Kanalzugriffssteuerblock 39 liefert einem Block 42, der z.B. die Schaltfunktionen Kanalcodierung, Interleaving, Kanalmultiplex und bei Verwendung eines CDMA-Systems auch eine Spreizung durchführt. Ferner gibt der Kanalzugriffssteuerblock 39 einem Zeitsteuerelement 40 den Startzeitpunkt einer Signalisierungssequenz an. Die Nutz- und Steuerdaten erhält der Kanalzugriffssteuerblock 39 von verschiedenen Quellen. Eine solche Quelle kann beispielsweise eine Niederfrequenzschaltung sein, die Sprachdaten als Nutzdaten liefert, oder ein Steuerungselement, welches Steuerdaten zuführt. Beispielsweise können diese Steuerdaten Informationen über den Startzeitpunkt einer Signalisierungssequenz sein. Das Zeitsteuerelement 40 liefert Zeitmarken an einen Generator 41 zur Erzeugung einer Signalisierungssequenz. Die Zeitmarken können beispielsweise die Start- und Endzeitpunkte von rechteckförmigen Impulsen der Signalisierungssequenz sein. Der Generator enthält einen Speicher zur Speicherung verschiedener Signalisierungssequenzen. Die auszusendende Signalisierungssequenz wird von dem Kanalzugriffssteuerblock ausgewählt. In den Speicher des Generators 41 können gegebenenfalls Signalisierungssequenzen eingeschrieben werden. Der Generator 41 und das Zeitsteuerelement 40 werden nach Empfang der Information über die zu verwendende Signalisierungssequenz und des Startzeitpunktes der Signalisierungssequenz initialisiert. Wenn keine Änderung der Signalisierungssequenz und/oder des Startzeitpunktes von der zugeordneten Basisstation angezeigt wird, ist eine weitere Initialisierung von Generator 41 und Zeitsteuerelement 40 nicht erforderlich.

Die im Block 42 bearbeiteten Nutz- und Steuerdaten werden einer Überlagerungschaltung 43 geliefert, die noch die Ausgangssignale des Generators 41 erhält. Das von der Überlagerungsschaltung 43 abgegebene Ausgangssignal wird über einen Modulator 44, einem Digital-Analog-Umsetzer 45, einem Zwischenfrequenzblock 46 zu einem Hochfrequenzblock 47 übertragen, der mittels einer Antenne 48 die im Hochfrequenzblock gebildeten Signale abstrahlt.

Wie oben schon erwähnt, muß die Länge und die Amplitude einer Signalisierungssequenz jeweils so gering wie möglich sein, um die Interferenz mit anderen Signalen und die Detektionsdauer zu reduzieren. Bei einer Verringerung der Länge und/oder Amplitude der Signalisierungssequenz, kann eine erhöhte Fehler-Alarm-Rate (False-Alarm-Rate = FAR) auftreten. Eine Fehler-Alarm-Rate ist gleich der Wahrscheinlichkeit, daß der dem Matched-Filter nachgeschaltete Impulsdetektor einen Impuls detektiert, obwohl keine Signalisierungssequenz gesendet worden ist.

Um die Fehler-Alarm-Rate so gering wie möglich zu halten, sollte vorzugsweise eine Signalisierungssequenz mit 4096 Chipintervallen gewählt werden. Die Erzeugung von Signalisierungssequenzen mit einer solchen Länge bedeutet einen großen Aufwand im Vergleich mit einer Gold-Sequenz mit 256 Chipinterwallen als Signalisierungssequenz, weil größere Speicher im Terminal und der Basisstation benötigt werden und weil insbesondere das Matched-Filter in der Basisstation zu komplex wird. Um diesen Aufwand zu reduzieren, werden die Signalisierungssequenzen in einem Terminal in mindestens zwei Schritten erzeugt. In einem ersten Schritt wird ein erste Codesequenz erzeugt, die in einem zweiten Schritt mit einer zweiten Codesequenz verkettet wird. Die Verkettung beider Codesequenzen ergibt die Signalisierungssequenz. Durch die Verkettung läßt sich das Matched-Filter in der Basisstation dann zweistufig realisieren, was zur Reduktion der Komplexität führt.

Beispielsweise kann als erste Codesequenz eine Barker-Sequenz mit 13 Zeitintervallen und als zweite Codesequenz ein Gold-Sequenz mit 256 Zeitintervallen verwendet werden. Durch die Verkettung ergibt sich eine Signalisierungssequenz mit 3328 Chipintervallen. Durch die Verkettung werden praktisch die guten Autokorrelationseigenschaften der aus 256 Zeitintervallen bestehenden Gold-Sequenz an die verkettete Signalisierungssequenz weitergegeben. Das liegt daran, weil die Barker-Sequenz eine optimale aperiodische Autokorrelationsfunktion aufweist und dadurch die guten Autokoffelationseigenschaften der Gold-Sequenz kaum verändert werden.

Mathematisch läßt sich die Verkettung zwischen den beiden Codesequenzen folgendermaßen ausdrücken. Die erste Codesequenz, die eine Barker-Sequenz mit 13 Zeitintervallen ist, wird mit b(t) und die zweite Codesequenz, die ein Gold-Sequenz mit 256 Zeitintervallen ist, wird mit g(t) bezeichnet. T soll die Dauer eines Chipintervalls sein. Ein Abtastwert der Barker-Sequenz erscheint zum Zeitpunkt t=i*256*T (i = 0, 1, ... , 12) und ein Abtastwert der Gold-Sequenz zum Zeitpunkt=j*T (j =0, ... , 255). Die Verkettung dieser beiden Codesequenzen b(t) und g(t) kann mathematisch als Faltung b(t)*g(t) ausgedrückt werden. Eine solche Faltung ist einer Spreizung jedes Abtastwerts der Barker-Sequenz mit der Gold-Sequenz äquivalent.

Die Erzeugung einer solchen Signalisierungssequenz in zwei Schritten aus einer Barker- und einer Gold-Sequenz kann in dem Generator 41 des in Fig. 9 dargestellten Sender eines Terminals durchgeführt werden. Der Generator 41 spreizt eine Barker-Sequenz mit der Gold-Sequenz und liefen somit eine Signalisierungssequenz mit 3328 Chipintervallen an die Überlagerungsschaltung 43.

Zur Detektierung einer solchen Signalisierungssequenz aus zwei Codesequenzen sind in einer Basisstation zwei in Reihe geschaltete Matched-Filter erforderlich. Das Ausgangssignal des zweiten Matched-Filters wird dem Impulsdetektor zugeführt. Das erste Matched-Filter ist an die zweite Codesequenz (Gold-Sequenz mit 256 Zeitintervallen) und das zweite Matched-Filter an die erste Codesequenz (Barker-Sequenz mit 13 Zeitintervallen) angepaßt. Das zweite Matched-Filter liefert bei Vorliegen einer Signalisierungssequenz deren Autokorrelationsfunktion, welche dem Impulsdetektor zur Findung des Hauptimpulses zugeführt wird.

Das in Fig. 6 dargestellte Matched-Filter 21 muß um ein weiteres zweites Matched-Filter erweitert werden, um eine Signalisierungssequenz mit zwei Codesequenzen zu detektieren. Das erste Matched-Filter 21 muß an die zweite Codesequenz und das zweite in der Fig. 6 nicht näher dargestellte Matched-Filter, welches zwischen dem ersten Matched-Filter 21 und dem Impulsdetektor 22 zwischengeschaltet sein muß, an die erste Codesequenz angepaßt sein.

Zur weiteren Verbesserung der Detektierbarkeit der Signalisierungssequenz läßt sich das zweite Matched-Filter durch ein Mis-Matched-FIR-Filter ersetzen, dessen Länge gleich oder größer als die Anzahl der Zeitintervalle der ersten Codesequenz (Barker-Sequenz) ist. Die FIR-Filterkoeffizienten lassen sich so bestimmen, daß das Verhältnis des Hauptmaximums zur Summe aller Nebenmaxima des Filterausgangssignals auf die erste Codesequenz (Barker-Sequenz) maximiert wird. Dieses Verhältnis läßt sich auch in einer anderen mathematischen Form ausdrücken (z.B. quadratisch).

## Patentansprüche

1. Drahtloses Netzwerk mit mindestens einer Basisstation (1 bis 3) und mehreren zugeordneten Terminals (4 bis 14) zum Austausch von Nutz- und Steuerdaten,
**dadurch gekennzeichnet,**
**daß** die Basisstation (1 bis 3) zur Sendung des Startzeitpunktes wenigstens einer Signalisierungssequenz wenigstens eines Terminals (4 bis 14) vorgesehen ist,
**daß** die Basisstation (1 bis 3) eine Vorrichtung (21, 22) zur Korrelation einer empfangenen Signalisierungssequenz und zur Detektion des aus einer empfangenen und korrelierten Signalisierungssequenz entstandenen Impulses enthält und
**daß** ein Terminal (4 bis 14) zur Erzeugung einer Signalisierungssequenz durch Faltung zweier Codesequenzen vorgesehen ist.

2. Drahtloses Netzwerk nach Anspruch 1,
**dadurch gekennzeichnet,**
**daß** eine erste Codesequenz eine Barker-Sequenz mit 13 Zeitintervallen und die zweite Codesequenz eine Gold-Sequenz mit 256 Zeitintervallen ist.

3. Drahtloses Netzwerk nach Anspruch 1,
**dadurch gekennzeichnet,**
**daß** eine Basisstation (1 bis 3) zwei in Reihe geschaltete Matched-Filter oder ein Matched-Filter und ein nachgeschaltetes Mis-Matched-Filter zur Erzeugung wenigstens eines Impulses nach Empfang einer Signalisierungssequenz aus zwei gefalteten Codesequenzen und einen Impulsdetektor (22) enthält und
**daß** der Impulsdetektor (22) während eines bestimmten Detektionsfensters, dessen Startzeitpunkt und Dauer durch die Kanaleigenschaften und den Startzeitpunkt einer Signalisierungssequenz bestimmt ist, zur Detektion wenigstens, eines einem Terminal (4 bis 14) zugeordneten Impulses vorgesehen ist.

## Claims

1. A wireless network comprising at least one base station (1 to 3) and a plurality of assigned terminals (4 to 14) for exchanging user data and control data, **characterized in that** the base station (1 to 3) is provided for transmitting the start time of at least one signaling sequence of at least one terminal (4 to 14), **in that** the base station (1 to 3) includes a device (21, 22) for correlating a received signaling sequence and for detecting the pulse evolved from a received correlated signaling sequence and **in that** a terminal (4 to 14) is provided for generating a signaling sequence by folding two code sequences.

2. A wireless network as claimed in claim 1, **characterized in that** a first code sequence is a Barker sequence having 13 time intervals and a second code sequence is a Gold sequence having 256 time intervals.

3. A wireless network as claimed in claim 1, **characterized in that** a base station (1 to 3) includes two series-connected matched filters or one matched filter and one mismatched filter connected downstream of the matched filter for generating at least one pulse after a signaling sequence comprising two convoluted code sequences has been received and includes a peak detector (22) and **in that** the peak detector (22) is arranged for detecting at least a pulse assigned to a terminal (4 to 14) during a specific detection window whose start time and duration are determined by the channel properties and the start time of a signaling sequence.

## Revendications

1. Réseau sans fil avec au moins une station de base (1 ) 3) et plusieurs terminaux affectés (4 à 14) pour l'échange de données utiles et de données de commande,
**caractérisé en ce**
**que** la station de base (1 à 3) est prévue pour la transmission du moment de début d'au moins une séquence de signalisation d'au moins un terminal (4 à 14),
**que** la station de base (1 à 3) contient un dispositif (21, 22) de corrélation d'une séquence de signalisation reçue et de détection de l'impulsion formée à partir d'une séquence de signalisation reçue et corrélée et qu'un terminal (4 à 14) est prévu pour la production d'une séquence de signalisation par pliage de deux séquences de code.

2. Réseau sans fil selon la revendication 1,
**caractérisé en ce**
**qu'**une première séquence de code est une séquence de Barker avec 13 intervalles temporels et la deuxième séquence de code est une séquence de Gold avec 256 intervalles temporels.

3. Réseau sans fil selon la revendication 1,
**caractérisé en ce**
**qu'**une station de base (1 à 3) contient deux filtres matched montés en série ou un filtre matched et un filtre mismatched monté en aval pour la production d'au moins une impulsion après réception d'une séquence de signalisation à partir de deux séquences de code pliées et un détecteur d'impulsions (22) et
**que** le détecteur d'impulsions (22) est prévu pour la détection d'au moins une impulsion affectée à un terminal (4 à 14) pendant une fenêtre de détection déterminée dont le moment de début et la durée sont déterminés par les propriétés du canal et le moment de début d'une séquence de signalisation.
